# EUROPÄISCHE PATENTSCHRIFT

(11) **EP 2 892 313 B1**
(45) Veröffentlichungstag und Bekanntmachung des Hinweises auf die Patenterteilung: **05.06.2019**
(21) Anmeldenummer: 13752895.6
(22) Anmeldetag: 23.08.2013
(51) Int. Cl.: A01B 3/46

(54) **DREHPFLUG**
ALTERNATING PLOUGH
CHARRUE RÉVERSIBLE

(30) Priorität: 05.09.2012 DE 102012108230
(43) Veröffentlichungstag der Anmeldung: 15.07.2015
(73) Patentinhaber: Amazonen-Werke H. Dreyer GmbH & Co. KG, 49205 Hasbergen (DE)
(72) Erfinder: LAUMANN, Bernhard, 48477 Hörstel-Riesenbeck (DE); RESCH, Rainer, 49170 Hagen a TW (DE)
(86) Internationale Anmeldenummer: PCT/EP2013/067497
(87) Internationale Veröffentlichungsnummer: WO 2014/037230

(56) Entgegenhaltungen:
- DE-A1- 19 718 988
- DE-A1-102005 037 852
- US-A- 2 845 014

## Beschreibung

Drehpflüge mit an gegenüberliegenden Seiten eines Pflugrahmens angeordneten Pflugscharreihen haben Pflugscharreihen, die auf der einer Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders, ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Vielfach sind die Pflugkörperhalterungen an der Unter- und an der Oberseite des Pflugrahmens des Drehpfluges befestigt. Ein Beispiel dazu ist der aus der DE 197 18 988 A1 bekannte Pflug, bei dem die Pflugkörper über Klemmplatten am Pflugrahmen festzulegen sind. Die Klemmplatten bedecken dabei mit einander zugewandten Schenkeln die Ober- und Unterseite des Pflugrahmens und haben nach oben und unten gerichtete Befestigungsansätze, die über Schrauben und Muttern miteinander zu verspannen sind. Dadurch werden die Klemmkräfte auf den Pflugrahmen übertragen. Die abgewinkelten Schenkel mit ihren empor bzw. während der Arbeitsstellung des Pfluges zur Bodenoberfläche hin gerichteten Befestigungsansätzen sowie die Klemmschrauben beeinträchtigen den Raum oberhalb und unterhalb des Pflugrahmens während des Arbeitseinsatzes erheblich. Ein derartiger Pflug neigt daher zu Verstopfungen, die durch diese Pflugkörperhalterungen ausgelöst werden können.

Durch die US 2 845 014 ist ein Drehpflug mit an gegenüberliegenden Seiten eines Pflugrahmens angeordneten Pflugscharreihen angeordnet. Die Pflugscharreihen weisen auf der einen Seite rechtswende Pflugkörper und auf der anderen Seite linkswende Pflugkörper auf, die jeweils wechselseitig bei einer Hinfahrt und bei einer Rückfahrt zum Einsatz kommen. Der Pflugrahmen ist T-förmig ausgestaltet.

An dem Querschenkel des T-förmigen Pflugrahmens sind die Pflugkörperhalterungen mittels einer Schrauben aufweisenden Schraubverbindung angeschraubt. Die auf die Pflugkörper der Pflugscharreihen einwirkenden Kräfte müssen allein von den Schrauben der Schraubverbindungen aufgenommen werden. Hierdurch wirken starke Scherkräfte auf die Schrauben ein. Hier kann es dann teilweise in nachteiliger Weise zum Abscheren der Schrauben der Schraubverbindungen kommen. Die Schrauben müssen dann ersetzt werden, damit die Pflugkörperhalterungen wieder in vorgesehener Weise an dem Pflugscharrahmen befestigt sind.

Es ist Aufgabe der vorliegenden Erfindung, einen Drehpflug der eingangs genannten derart weiter zu bilden, dass eine verbesserte Befestigung der Pflugkörperhalterung am Pflugrahmen mit einer Entlastung der Schraubverbindung erreicht wird.

Diese Aufgabe wird erfindungsgemäß durch die kennzeichnenden Merkmale des Anspruches 1 gelöst.

Bei einem üblichen Vierkantpflugrahmen sind die Pflugkörperhalterung eines Pflugkörpers nach der Erfindung nur an den beiden Seitenwänden befestigt ist. Damit kann der Pflugrahmen in seiner Arbeitsstellung in seinen Bereichen oberhalb seiner oberen Wandung und unterhalb seiner unteren Wandung frei von Befestigungen und Befestigungsansätzen von Pflugkörperhalterungen gehalten werden, womit ein Verstopfungs- und ein Verschmutzungsrisiko erheblich vermindert wird.

Besonders bevorzugt ist, wenn die Pflugkörperhalterung mit der einen Seitenwand oder mit zwei Seitenwänden des Pflugrahmens verschraubt wird. Letzteres kann dergestalt erfolgen, dass zumindest eine Schraube oder dgl. Befestigungsmittel den Pflugrahmen durchsetzt, so dass die Pflugkörperhalterung an beiden Seitenwänden des Pflugrahmens angeschlossen ist, ohne dass sich die Pflugkörperhalterung in Bereichen oberhalb oder unterhalb des Pflugrahmens an dortige Wandungsteile anlegt.

Besonders bevorzugt wird, wenn die Pflugkörperhalterung zumindest ein Ansatzelement aufweist, das formschlüssig in eine komplementär ausgebildete Ausnehmung des Pflugrahmens eingreift. Alternativ kann ein derartiges Ansatzelement auch am Pflugrahmen vorgesehen sein, das in eine entsprechend komplementär ausgebildete Ausnehmung der Pflugkörperhalterung eingreift. Es ist ebenfalls möglich, zwei oder mehr Ansatzelemente an der Pflugkörperhalterung vorzusehen bzw. umgekehrt am Pflugrahmen, die in entsprechende Ausnehmungen eingreifen. Durch dieses Ansatzelement ist zunächst die Pflugkörperhalterung am Pflugrahmen zu zentrieren, und kann dann über weitere Befestigungselemente, beispielsweise über weitere Schrauben mit dem Pflugrahmen sicher verbunden werden. Durch den Formschluss eines entsprechenden Ansatzelementes in der komplementär ausgebildeten Ausnehmung ergibt sich eine sichere und die Schraubverbindung entlastende Anordnung der Pflugkörperhalterung an dem Pflugrahmen, die auch als Widerlager dient und mithin Stoßbelastungen sicher abfängt.

An der Pflugkörperhalterung, insbesondere wenn sie seitlich an dem Pflugrahmen vorgesehen ist, kann sich in besonders vorteilhafter Weise auch eine Vorrichtung zur Einstellung der Pflugarbeitsbreite anschließen, und zwar dergestalt, dass der Pflugkörper um eine im wesentlichen lotrechte Achse schwenkbar am Pflugrahmen über einen eine Ausnehmung des Pflugrahmens durchsetzende Hebel verstellbar ist. Der die Ausnehmung des Pflugrahmens durchsetzende Hebel kann seinerseits beweglich mit zumindest einem Teil der Pflugkörperhalterung verbunden sein. Dazu kann die Pflugkörperhalterung zwei- und mehrteilig ausgebildet sein, beispielsweise mit einem Pflugkörperhalteteil, das - wie vor erwähnt - seitlich an dem Pflugrahmen mit Schrauben und einem formschlüssig in eine Ausnehmung angreifenden Ansatz befestigt ist. An diesem Pflugkörperhalteteil können z.B. Konsolen befestigt werden, zwischen denen eine lotrechte Achse definiert ist, so dass die Konsolen, an denen ein Pflugkörper zu befestigen ist, relativ zu dem an dem Pflugrahmen befestigten Pflugkörperhalteteil bewegt werden können. Das seitlich an den Pflugrahmen angebundene Pflugrahmenhalteteil kann seinerseits eine Ausnehmung, beispielsweise eine schlitzförmige Ausnehmung haben, die zu der Ausnehmung, im Pflugrahmen fluchtet, so dass der Hebel zur Verstellung der Arbeitsbreite nicht nur den Pflugrahmen sondern auch das Pflugrahmenhalteteil durchsetzen kann.

Durch die bewegliche Verbindung des Hebels mit der Pflugkörperhalterung, insbesondere durch die schwenkbewegliche Verbindung und die Verschwenkbarkeit um eine im wesentlichen horizontale Achse, können weiterhin wirksam Stöße aufgefangen werden, um die Verschleißanfälligkeit des Pfluges weiter zu vermindern. Weitere Vorteile und Ausgestaltungen der Erfindung ergeben sich aus weiteren Unteransprüchen, der nachstehenden Beschreibung und der Zeichnung. In der Zeichnung zeigen:
- Fig. 1: eine schematische Seitenansicht auf ein Ausführungsbeispiel eines Drehpfluges nach der Erfindung;
- Fig. 2: ausschnittsweise in perspektivischer Darstellung einen Teilbereich des Pflugrahmens mit angedeuteter Pflugschar;
- Fig. 3: eine zu Fig. 2 analoge Darstellung aus einer anderen mehr von oben ausgerichteten Perspektive;
- Fig. 4: ein Teilausschnitt einer perspektivischen Darstellung auf den Pflugrahmen mit Pflugkörperhalterung (ohne Pflugschar);
- Fig. 5: eine perspektivische Darstellung schräg von oben auf das Ausführungsbeispiel nach Fig. 4 mit angedeutetem Pflugschar;
- Fig. 6: eine zu Fig. 5 analoge Darstellung,
- Fig. 7: eine Darstellung eines Teilbereich des Pflugrahmens in einer Ansicht schräg von oben;
- Fig. 8: eine Seitenansicht auf die Pflugkörperhalterung von der dem Pflugschar abgewandten Seite;
- Fig. 9: einen Teilausschnitt einer perspektivischen Darstellung eines Ausführungsbeispieles auf einen Drehpflug im Bereich der Anbindung des Pflugrahmens an dem Anbaubock für die Verbindung mit einem landwirtschaftlichen Zugfahrzeug;
- Fig. 10: vergrößert den Bereich des seitlich am Pflugrahmen angebauten Halterungsteiles des Anbaubockes;
- Fig. 11: eine zu Fig. 10 analoge Darstellung des Anbauteiles des Ausführungsbeispiels nach den Fig. 9 und 10 vor der Montage;
- Fig. 12: eine zu Fig. 11 analoge Darstellung von der gegenüberliegenden Seite betrachtet vor der Montage an dem Pflugrahmen, und
- Fig. 13: ein Ausführungsbeispiel eines verstellbar ausgebildeten Ansatzelements des Halterungsteiles oder des Pflugkörperhalteteils, das in eine entsprechende Ausnehmung innerhalb des Pflugrahmens einzusetzen ist.

In der Zeichnung sind grundsätzlich übereinstimmende Teile mit übereinstimmenden Bezugsziffern versehen.

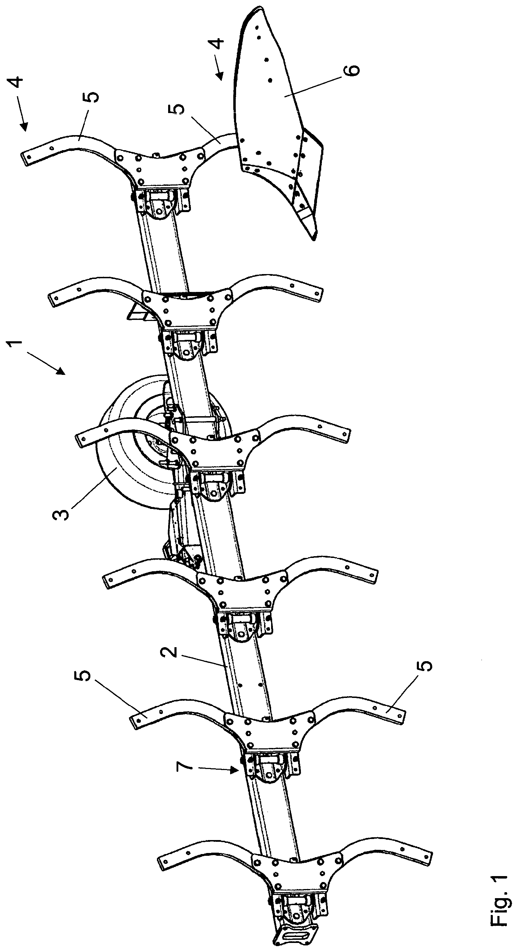

In Fig. 1 ist ein Ausführungsbeispiel eines allgemein mit 1 bezifferten Drehpfluges gezeigt, der über eine nicht im Einzelnen dargestellten Anbaubock an einen ebenfalls nicht im Einzelnen näher dargestellten landwirtschaftlichen Schlepper anhängbar ist und der einen Pflugrahmen 2 aufweist, der über ein Stützrad 3 auf dem Erdboden abzustützen ist. Der Pflugrahmen 2 trägt allgemein mit 4 bezifferte gegenüberliegende Pflugscharreihen mit am Pflugarmen 5 angeordneten Pflugkörpern 6, die gegenüberliegend an den Pflugrahmen 2 angeordnet sind. In dem Ausführungsbeispiel nach Fig. 1 ist nur ein Pflugkörper 6 angedeutet.

In der Darstellung nach Fig. 1 sind die unteren Pflugkörper 6 einer Pflugscharreihe 4 in der Arbeitsstellung. Durch eine Bewegung um 180° kann der Pflugrahmen 2 gedreht werden, so dass die gegenüberliegende Pflugscharreihe 4 mit daran montierten Pflugkörpern 6 in die Arbeitsstellung gelangen. Die dazu erforderlichen Teile wie Drehwelle, Zylindereinheiten sind aus Gründen der besseren Übersichtlichkeit nicht dargestellt.

Die Pflugkörper 6 und mithin die Pflugscharreihen 4 sind über die Pflugarme 5 an einer allgemein mit 7 bezifferten Pflugkörperhalterung an dem Pflugrahmen 2 befestigt. Wie im Einzelnen anhand weiterer Figuren noch dargestellt wird, ist die Pflugkörperhalterung 7 bei dem gezeigten Ausführungsbeispiel mehrteilig ausgebildet, und zwar dergestalt, dass sie den oberen Bereich des Pflugrahmens 2 genauso wie den unteren Bereich des Pflugrahmens 2 freilässt und sich nur an seitlichen in Fig. 1 dem Betrachter zugewandten Bereichen des Pflugrahmens 2 anschließt. Damit gehen im Alltagsbetrieb erhebliche Vorteile einher, da insbesondere die Pflugrahmenoberseite frei von Anbauten gestaltet ist mit erheblichen Vorteilen im rauen Alltagseinsatz.

Wie im Einzelnen noch näher erläutert werden wird, sind die Pflugarme 5 mit den Pflugkörpern 6 um eine lotrechte Achse verschwenkbar und auch hinsichtlich ihrer Arbeitsbreite zu verstellen. Dies wird anhand der weiteren Darstellungen näher erläutert werden.

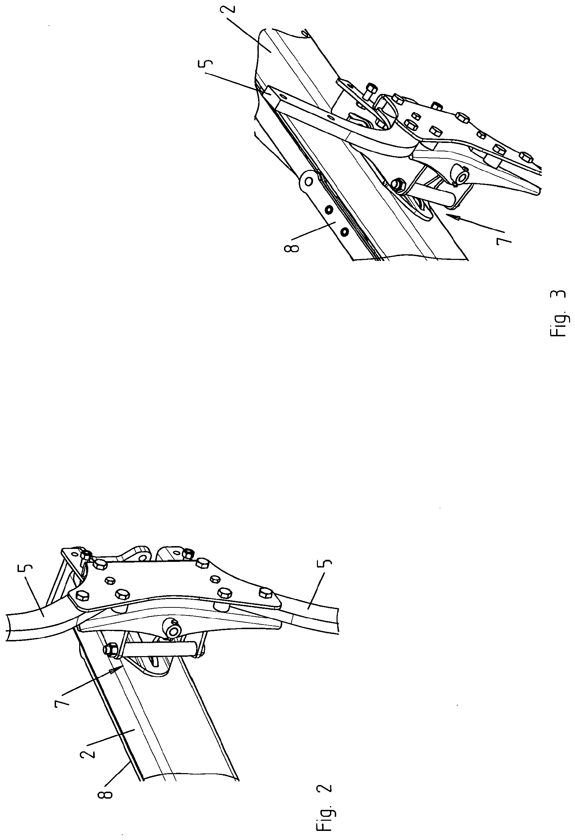

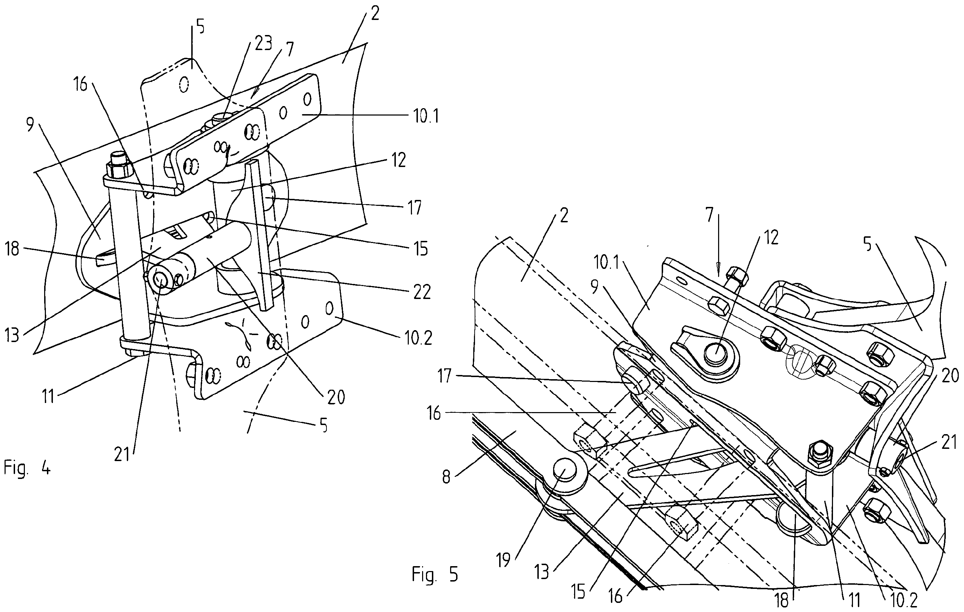

Wie die Fig. 2 und 3 zeigen, sind die Pflugkörper 6 und damit die Pflugscharreihen 4 und 5 über die Pflugkörperhalterung 7 an dem Pflugrahmen 2 befestigt. Fig. 3 zeigt, dass eine Verstellstange 8 seitlich neben dem Pflugrahmen 2 vorgesehen ist, um mithilfe von nicht gezeigten Stellzylindern die Arbeitsbreite des Pfluges 1 über eine Verstellung und damit um eine Verschwenkung der Pflugscharreihen 4 mit angeordneten Pflugkörpern 6 einzustellen. Die Pflugscharreihen bzw. die entsprechenden Halter 7 der Pflugkörper 6 sind über eine Befestigungsplatte mit der Pflugkörperhalterung 7 verschraubt. Die entsprechenden Teile sind näher aus den Fig. 4, 5 und 6 ersichtlich. Die Pflugkörperhalterung 7 besteht in dem dargestellten Ausführungsbeispiel aus mehreren Teilen, nämlich zunächst dem Pflugkörperhalteteil 9 und zwei mit Abstand zueinander angeordneten Konsolen 10.1 und 10.2, wobei 10.1 die obere Konsole und 10.2 die untere Konsole beziffert. Diese sind gegensinnig abgewinkelt, um dort über Schrauben, die in entsprechende Schraublöcher einzuführen sind, die Befestigungsplatte der Pflugarme 5 der Pflugschare 6anzubinden. Die Konsolen 10.1 und 10.2 sind über eine Schraube 11 und über eine Bolzenhülsenbefestigung 12 miteinander verbunden. Die Bolzenhülsenbefestigung 12 definiert darüber hinaus eine lotrechte Achse, über die die Konsolen mit adaptierten Pflugscharen 4 und 5 relativ zu dem Pflugrahmen 2 zur Verstellung der Arbeitsbreite innerhalb eines vorgegebenen Schwenkweges zu verschwenken sind.

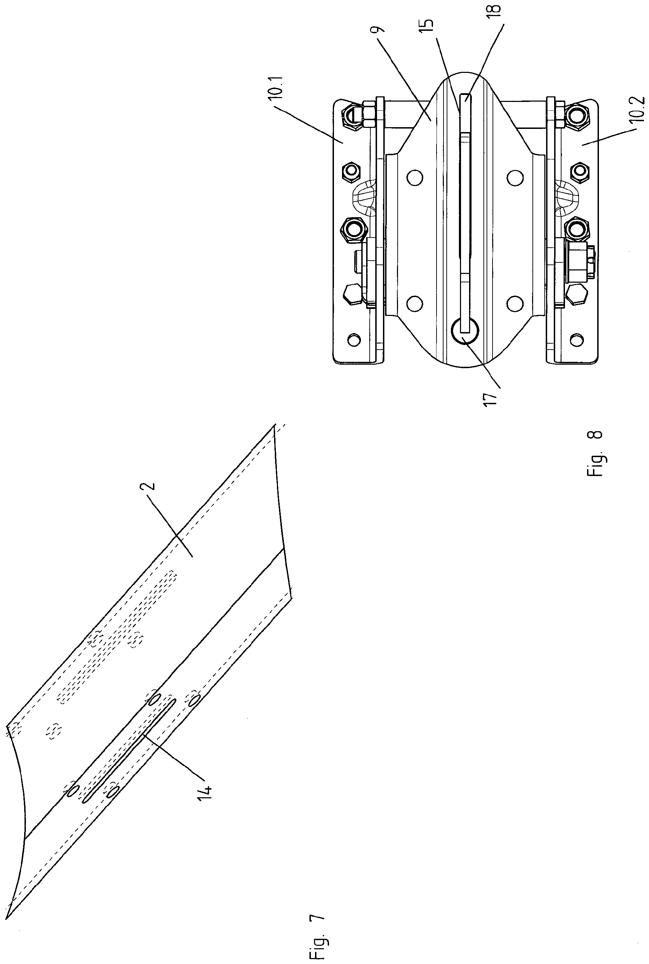

Dazu ist ein Hebel 13 vorgesehen, der eine Ausnehmung 14 (Fig. 7) durchsetzt. Des Weiteren ist in dem Pflugkörperhalteteil 9 ebenfalls eine Ausnehmung 15 vorgesehen, die von dem Hebel 13 ebenfalls durchsetzt ist. Wie aus Fig. 5 ersichtlich ist, ist der Hebel 13 gelenkig mit der Verstellstange 8 verbunden. Das Pflugkörperhalteteil 9 hat eine im Querschnitt im Wesentlichen U-förmige Gestalt und ist mit dem Pflugrahmenteil 2 verbunden, und zwar über Schrauben 16. Des Weiteren hat das Pflugkörperhalteteil 9 noch Vorsprünge 17 und 18, die in eine entsprechende Ausnehmung innerhalb des Pflugrahmens 2 und/oder die Ausnehmung 14 am Pflugrahmen 2 eingreifen, um ein Widerlager darzubieten, so dass das Pflugkörperhalteteil 9 nicht nur über die Schrauben 16 an dem Pflugrahmen 2 gesichert ist. Alternativ können auch am Pflugrahmen 2 entsprechende Vorsprünge vorgesehen sein, um in entsprechende Ausnehmungen am Pflugkörperhalteteil 9 einzugreifen.

In besonders vorteilhafter Weise ist der Hebel 13 beweglich mit der Bolzenhülseneinheit 2 und somit mit dem gegenüber den Pflugrahmen 2 verschwenkbaren Teil der Pflugkörperhalterung 7 verbunden, die durch die Konsolen 10.1 und 10.2 gebildet sind. Dazu ist der Hebel 13 an seiner der Gelenkstelle 19 an dem Verstellhebel 8 abgewandten Ende mit der im Wesentlichen horizontal ausgerichtete Achse 21 verbunden. Dieser Gelenkbolzen ist in einer Gelenkhülse angeordnet, die mit dem Bolzen/Hülsenteil 12 über einen Flansch 22 verbunden ist, so dass über den Hebel 13 die Verstellung der Konsolen 10.1 und 10.2 mitsamt der Gelenkbolzen-/Hülseneinheit 20 zu vollziehen ist, womit die Pflugscharreihen 4 und damit die Pflugarme 5 mit den die Pflugkörpern 6 zu verstellen sind.

Über die Achse 21 ist der Hebel 13 gegenüber der Pflugkörperhalterung 7 um die im Wesentlichen horizontal ausgerichtete Achse 23 beweglich und mithin auch gegenüber den die Pflugkörpern 6 tragenden Pflugarme 5. Gleichwohl ist der Hebel 13 innerhalb der Ausnehmung 14 bzw. der Ausnehmung 15 in dem Pflugkörperhalteteil 9 geführt, und zwar hinsichtlich der Anschläge, die sich links und rechts, bezogen auf die Darstellung nach Fig. 4 neben dem dargestellten Hebel 13 befinden, aber auch nach oben und unten, so dass die jeweilige Ausnehmung 14 am Pflugrahmen 2 bzw. die Ausnehmung 15 im Pflugkörperhalteteil 9 eine derartige Hocherstreckung hat, dass sich der Hebel 13 gegenüber der Pflugkörperhalterung 7 verschwenken und nach oben und unten bewegen lässt, jedoch nach einem bestimmten Schwenkweg nach oben und unten durch die jeweiligen Begrenzungswände der Ausnehmungen 14 und 15 auch wiederum Anschläge vorfindet, wodurch die Bewegung nach oben und unten hin begrenzt ist. So lassen sich Verspannungen in der beweglichen Verbindung zwischen dem Hebel 13 und der Pflugkörperhalterung 7 bzw. deren Teilen wirksam verhindern, was zu einem reparaturverminderten Betrieb des Drehpfluges führt.

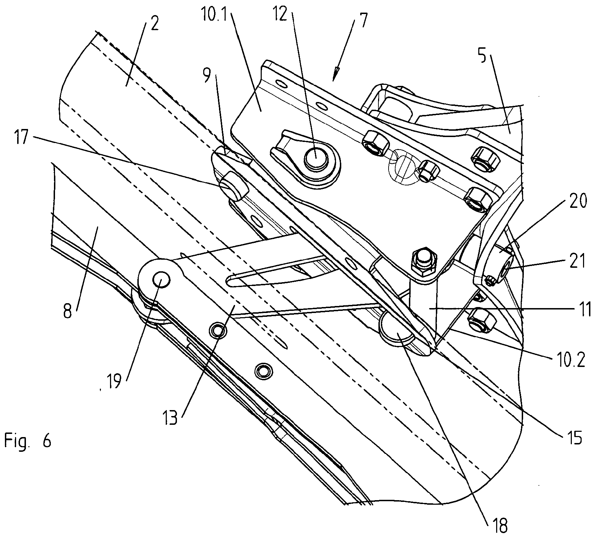

In den weiteren Darstellungen nach den Fig. 6, 7 und 8 sind die vorerwähnten Gestaltungsdetails in weiteren Ansichten noch näher dargestellt und mithin weiter verdeutlicht.

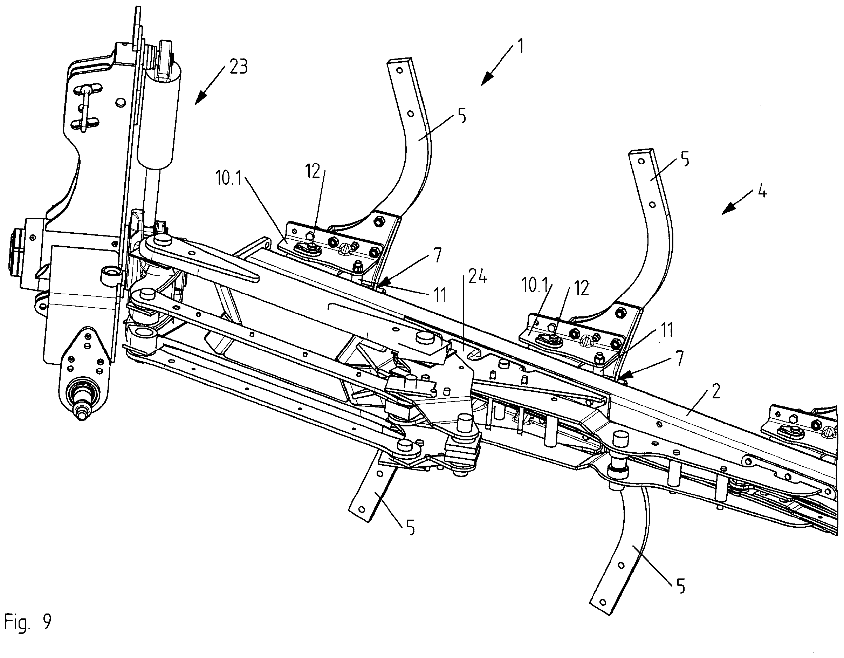

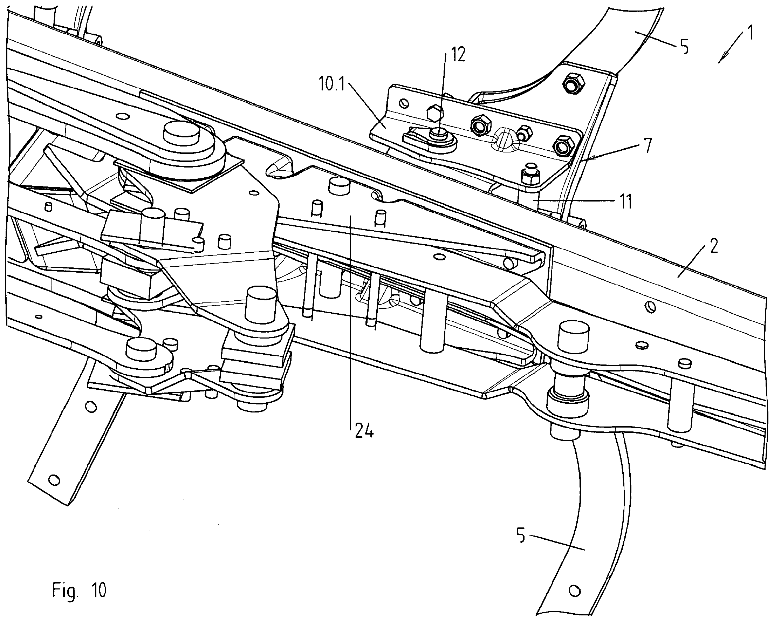

Neben den schon zuvor in den Figuren gezeigten Teilen der Pflugkörperhalterung 7 und der Pflugarme 5 der Pflugscharreihen 4 ist in den Fig. 9 bis 12 ein allgemein mit 23 bezifferter Anbaubock des Pfluges 1 gezeigt, der dazu dient, den Pflug 1 und damit den Pflugrahmen 2 mit einem landwirtschaftlichen Nutzfahrzeug, beispielsweise einem landwirtschaftlichen Schlepper, zu verbinden und dort z.B. einen Zapfwellenantrieb für die entsprechenden Dreh- und sonstigen Einstellungsbewegungen des Pfluges 1 anzubinden.

Der besseren Übersichtlichkeit wegen ist auf die nähere Gestaltung des Anbaubockes 23 an dieser Stelle verzichtet worden. Dieser soll jedoch technische Details aufweisen, die im Stand der Technik bekannt sind und mithin zahlreiche Vorbilder hat.

Wesentlich im Rahmen der vorliegenden Erfindung ist, dass dieser Anbaubock 23 ein Halterungsteil 24 hat, das auch wiederum an einer Seitenwandung des Pflugrahmens 2 angeflanscht ist, so dass die Ober- und Unterseite des als Vierkantrahmen ausgebildeten Pflugrahmens 2 frei von Anbauteilen auch von Verbindungsteilen des Pflugrahmens 2 ausgebildet ist. Da bereits die Pflughalterung 7 ebenfalls an einer Seitenwandung des Pflugrahmens 2 angebunden sind, ist somit insgesamt der Pflugrahmen 2 an seiner Ober- und an seiner Unterseite frei von jedweden Funktionsteilanbindungen, so dass etwaige dadurch bedingte und im Stand der Technik auftretende Verschmutzungen und Verstopfungsrisiken vermieden sind.

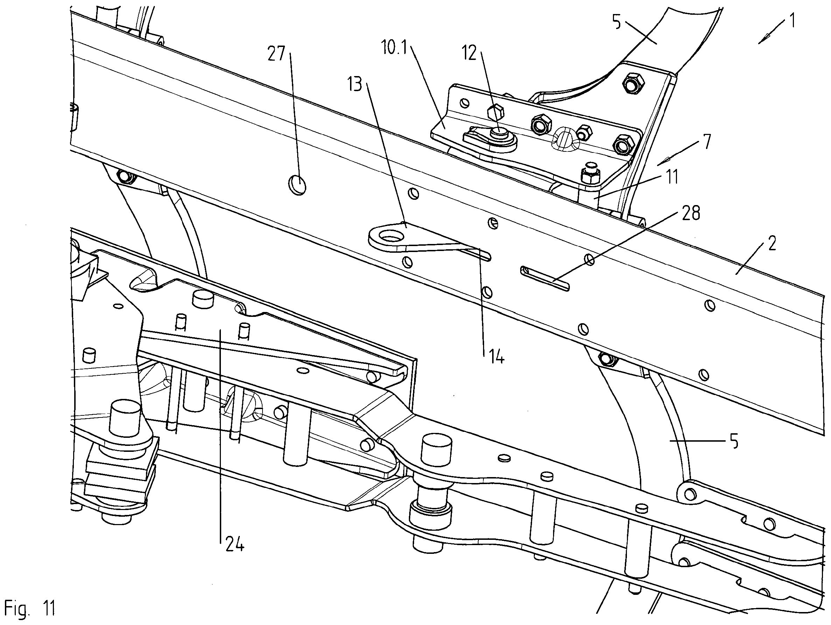

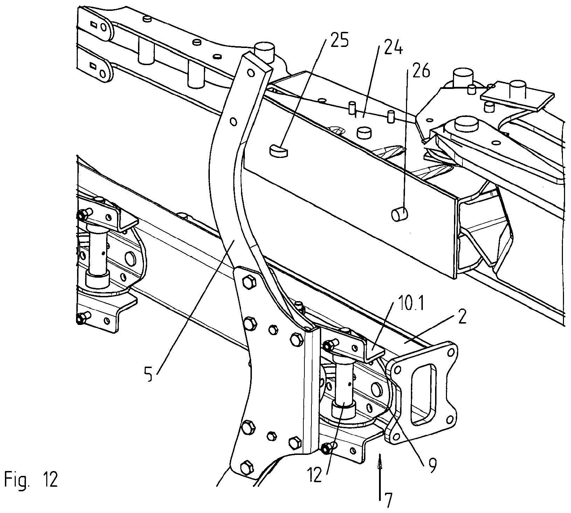

Das Halterungsteil 24 ist seinerseits mit einem oder mehreren Vorsprüngen bzw. Ansatzelementen 25 und 26 (Fig. 12) versehen, die in entsprechende Ausnehmungen 27 und 28 (Fig. 11) eingreifen können. Darüber hinaus ist das Halterungsteil 24 nach entsprechender Einführung der Vorsprünge 25 und 26 in die Ausnehmungen 27 und 28 am Pflugrahmen 28 über Schraubverbindungen oder dergleichen mit dem Pflugrahmen 2 verspannt. Durch die Ansatzelemente 25 und 26 lassen sich die entsprechenden Befestigungsverbindungen, also in aller Regel die Schraubverbindungen, wirksam entlasten.

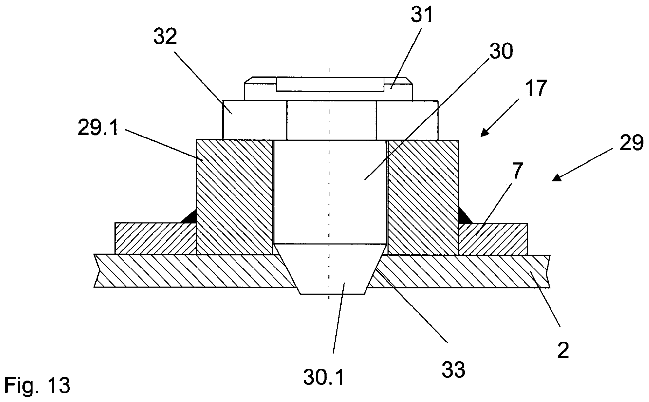

In Fig. 13 ist exemplarisch ein besonders gestaltetes Ansatzelement 29 gezeigt, das beispielsweise an dem Halterungsteil 24 oder aber auch an dem Pflugkörperhalteteil 27, vorgesehen sein kann. Exemplarisch ist dies dargestellt an dem Pflugkörperhalteteil 7. Das Pflugkörperhalteteil 7 ist mit Pflugrahmen 2 verbunden. Das Ansatzelement 29, das dem Ansatzelement 17 der Fig. 6 und 8 entsprechen soll, hat ein Buchsenteil 29.1, das ein Innengewinde aufweist, in das ein Schraubelement 30 mit einem Konusende 30.1 eingeschraubt ist, mit einem Fixierkonus 31 und einer Mutter 32. Somit ist das Schraubelement 30 lageveränderlich in der Ausnehmung 33 des Pflugrahmens gehalten, so dass der Vorsprung 29 bzw. 17 den individuellen Fertigungs- und Montageanforderungen durch eine Lageveränderung des Vorsprunges 30 individuell angepasst werden kann. So ist auch eine Vormontage und auch eine Endsicherung des Vorsprunges 17 bzw. 29 ermöglicht.

## Patentansprüche

1. Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4) mit Pflugkörpern (6), wobei durch eine über eine Antriebsvorrichtung eingeleitete Drehbewegung des Pflugrahmens (2) wahlweise die eine oder die andere Pflugscharreihe (4) in ihre Betriebsstellung oder in ihre Außerbetriebsstellung überführbar ist und wobei die Pflugkörper (6) über Pflugkörperhalterungen (7) an dem Pflugrahmen befestigt sind, wobei, die Pflugkörperhalterung (7) eines Pflugkörpers (6) nur an einer Seitenwand oder nur an zwei Seitenwänden des Pflugrahmens (2) in Bezug auf seine Arbeitsstellung befestigt und mit einer Seitenwand oder zwei Seitenwänden des Pflugrahmens (2) verschraubt ist, **dadurch gekennzeichnet, dass** die Pflugkörperhalterung (7) und/oder der Pflugrahmen (2) zumindest ein Ansatzelement (17) aufweist, das formschlüssig in eine komplementär ausgebildete Ausnehmung des Pflugrahmens (2) bzw. der Pflugkörperhalterung (7) eingreift und dass zumindest zwei mit Abstand zueinander vorgesehene Ansatzelemente (17) an der Pflugkörperhalterung (7) und/oder an dem Pflugrahmen (2) vorgesehen sind, die in den Ansatzelementen (17) zugeordnete Ausnehmungen an dem Pflugrahmen (2) und/oder an der Pflugkörperhalterung (7) formschlüssig eingreifen und dass das zumindest ein Ansatzelement (17) und die diesem zugeordnete Ausnehmung ein Widerlager für die Pflugkörperhalterung (7) ausbildet und zusätzlich zu dem Widerlager ein in den Pflugrahmen (2) eingreifendes Befestigungselement (16) vorgesehen ist.

2. Drehpflug nach Anspruch 1, **dadurch gekennzeichnet, dass** das zusätzlich zum Ansatzelement (17) vorgesehene Befestigungselement (16) durch zumindest eine Schraubverbindung gebildet wird.

3. Drehpflug nach einem der Ansprüche 1 bis 2 mit einer Vorrichtung zur Einstellung der Pflugarbeitsbreite in den jeweiligen Arbeitsstellungen, wobei die Pflugkörper (6) zur Einstellung der Pflugarbeitsbreite um eine im Wesentlichen lotrechte Achse schwenkbar am Pflugrahmen (2) und jeweils über einen eine Ausnehmung (14) des Pflugrahmens (2) durchsetzenden Hebel (13) verstellbar sind, **dadurch gekennzeichnet, dass** der die Ausnehmung (14) des Pflugrahmens (2) durchsetzende Hebel (13) beweglich mit zumindest einer Konsole (10.1, 10.2) der Pflugkörperhalterung (7) verbunden ist.

4. Drehpflug nach Anspruch 3, **dadurch gekennzeichnet, dass** der Hebel um eine in der Arbeitsstellung des Pflugkörpers (6) im Wesentlichen horizontal ausgerichtete Achse (21) schwenkbar mit zumindest einem Teil (10.1, 10.2) der Pflugkörperhalterung (7) verbunden ist.

5. Drehpflug nach einem der Ansprüche 3 oder 4, **dadurch gekennzeichnet, dass** der die Ausnehmung (14) des Pflugrahmens (2) durchsetzende Hebel (13) um eine Achse (21) schwenkbar ist, die parallel oder annähernd parallel zu einer Seitenwandung des Pflugrahmens (2) ausgerichtet ist.

6. Drehpflug nach einem der Ansprüche 3 bis 5, **dadurch gekennzeichnet, dass** der Hebel (13) über einen die Achse (21) zwischen dem Hebel (13) und der Pflugkörperhalterung (7) aufweisenden Gelenkbolzen (20) mit der Pflugkörperhalterung (7) verbunden ist.

7. Drehpflug nach einem der Ansprüche 3 bis 6, **dadurch gekennzeichnet, dass** die Ausnehmung (14) innerhalb des Pflugrahmens (2) zur Anordnung des Hebels (13) eine die Bewegung des Hebels (13) um die in etwa horizontal ausgerichtete Achse (21) zulassende Hocherstreckung aufweist.

8. Drehpflug nach einem der Ansprüche 3 bis 7, **dadurch gekennzeichnet, dass** der die Ausnehmung (14) durchsetzende Hebel (13) mitsamt der Schwenkachse (21) derart mit der Pflugkörperhalterung (7) verbunden ist, dass die Achse (21) bei Einstellung der Pflugarbeitsbreite in der jeweiligen Arbeitsstellung eine Schwenkbewegung zumindest eines Teils der Pflugkörperhalterung (7) um die lotrechte Achse mitmacht.

9. Drehpflug nach einem der Ansprüche 3 bis 8, **dadurch gekennzeichnet, dass** die Pflugkörperhalterung (7) zwei mit Abstand zueinander angeordnete Konsolen (10.1, 10.2) aufweist, zwischen denen eine Hülse (12) mit Gelenkbolzen vorgesehen ist, die die lotrechte Achse zur Einstellung der Arbeitsbreite ausbilden, wobei ein Befestigungsteil (22) mit der Hülse (12) verbunden ist, an denen der Hebel (13) mit der im Wesentlichen horizontal ausgerichteten Achse (21) angreift.

10. Drehpflug nach einem der Ansprüche 3 bis 9, **dadurch gekennzeichnet, dass** an den beiden mit Abstand zueinander angeordneten Konsolen (10.1, 10.2) der Pflugkörperhalterung (7) der Pflugkörper (6) abgestützt ist.

11. Drehpflug nach Anspruch 10, **dadurch gekennzeichnet, dass** die beiden mit Abstand zueinander angeordneten Konsolen (10.1, 10.2) an einem Pflugkörperhalteteil (9) befestigt sind, das mit dem Pflugrahmen (2) verbunden ist.

12. Drehpflug nach einem der Ansprüche 3 bis 11, **dadurch gekennzeichnet, dass** das Pflugkörperhalteteil einen Befestigungsansatz (18) aufweist, der in die Ausnehmung (14) des Pflugrahmens eingreift.

13. Drehpflug nach Anspruch 12, **dadurch gekennzeichnet, dass** das Pflugkörperhalteteil (9) zwischen den beiden mit Abstand zueinander angeordneten Konsolen (10.1, 10.2) endseitige Halteschenkel aufweist und mit den beiden Konsolen (10,1, 10.2) verschraubt ist.

14. Drehpflug nach einem der Ansprüche 3 bis 13, **dadurch gekennzeichnet, dass** die Pflugkörperhalterung (7) oder ein Teil (9) der Pflugkörperhalterung (7) eine mit der Ausnehmung (14) des Pflugrahmens (2) im wesentlichen kongruierende Ausnehmung (15) aufweist zur Aufnahme des Hebels (13).

## Claims

1. Reversible plough (1) with a plough frame (2) which is fastenable rotatably and/or pivotably to a headstock for connecting the reversible plough (1) to an agricultural tractor, and with rows of ploughshares (4) which are arranged on opposite sides of the plough frame (2) and have plough bodies (6), wherein, by means of a rotational movement of the plough frame (2) initiated via a driving device, either the one or the other row of ploughshares (4) is transferrable into the operating position thereof or into the non-operating position thereof, and wherein the plough bodies (6) are fastened to the plough frame via plough body holders (7), wherein the plough body holder (7) of a plough body (6) is fastened only to one sidewall or only to two sidewalls of the plough frame (2) with respect to the working position thereof, and is screwed to one sidewall or two sidewalls of the plough frame (2), **characterized in that** the plough body holder (7) and/or the plough frame (2) have/has at least one extension element (17) which engages in a form-fitting manner in a complementarily formed recess of the plough frame (2) and/or of the plough body holder (7), and **in that** at least two extension elements (17) which are provided at a distance from each other are provided on the plough body holder (7) and/or on the plough frame (2), said extension elements engaging in a form-fitting manner in recesses, which are assigned to the extension elements (17), on the plough frame (2) and/or on the plough body holder (7), and **in that** the at least one extension element (17) and the recess assigned thereto form an abutment for the plough body holder (7) and, in addition to the abutment, a fastening element (16) engaging in the plough frame (2) is provided.

2. Reversible plough according to Claim 1, **characterized in that** the fastening element (16) provided in addition to the extension element (17) is formed by at least one screw connection.

3. Reversible plough according to either of Claims 1 and 2 with a device for setting the plough working width in the respective working positions, wherein, in order to set the plough working width, the plough bodies (6) are adjustable on the plough frame (2) in a manner pivotable about a substantially perpendicular axis and in each case via a lever (13) passing through a recess (14) of the plough frame (2), **characterized in that** the lever (13) passing through the recess (14) of the plough frame (2) is movably connected to at least one bracket (10.1, 10.2) of the plough body holder (7).

4. Reversible plough according to Claim 3, **characterized in that** the lever is connected to at least one part (10.1, 10.2) of the plough body holder (7) in a manner pivotable about an axis (21) which is oriented substantially horizontally in the working position of the plough body (6).

5. Reversible plough according to either of Claims 3 and 4, **characterized in that** the lever (13) passing through the recess (14) of the plough frame (2) is pivotable about an axis (21) which is oriented parallel or approximately parallel to a sidewall of the plough frame (2).

6. Reversible plough according to one of Claims 3 to 5, **characterized in that** the lever (13) is connected to the plough body holder (7) via a hinge pin (20) having the axis (21) between the lever (13) and the plough body holder (7).

7. Reversible plough according to one of Claims 3 to 6, **characterized in that**, for the arrangement of the lever (13), the recess (14) within the plough frame (2) has a vertical extent permitting the movement of the lever (13) about the approximately horizontally oriented axis (21).

8. Reversible plough according to one of Claims 3 to 7, **characterized in that** the lever (13) passing through the recess (14) is connected together with the pivot axis (21) to the plough body holder (7) in such a manner that, when the plough working width is set in the respective working position, the axis (21) participates in a pivoting movement of at least one part of the plough body holder (7) about the perpendicular axis.

9. Reversible plough according to one of Claims 3 to 8, **characterized in that** the plough body holder (7) has two brackets (10.1, 10.2) which are arranged at a distance from each other and between which a sleeve (12) having hinge pins is provided, the hinge pins forming the perpendicular axis for setting the working width, wherein a fastening part (22) is connected to the sleeve (12), on which the lever (13) with the substantially horizontally oriented axis (21) acts.

10. Reversible plough according to one of Claims 3 to 9, **characterized in that** the plough body (6) is supported on the two brackets (10.1, 10.2), which are arranged at a distance from each other, of the plough body holder (7).

11. Reversible plough according to Claim 10, **characterized in that** the two brackets (10.1, 10.2), which are arranged at a distance from each other, are fastened to a plough body holding part (9) which is connected to the plough frame (2).

12. Reversible plough according to one of Claims 3 to 11, **characterized in that** the plough body holding part has a fastening extension (18) which engages in the recess (14) of the plough frame.

13. Reversible plough according to Claim 12, **characterized in that** the plough body holding part (9) has end-side holding limbs between the two brackets (10.1, 10.2) arranged at a distance from each other, and is screwed to the two brackets (10.1, 10.2).

14. Reversible plough according to one of Claims 3 to 13, **characterized in that** the plough body holder (7) or a part (9) of the plough body holder (7) has a recess (15), which is substantially congruent to the recess (14) of the plough frame (2), for receiving the lever (13) .

## Revendications

1. Charrue réversible (1) présentant
un bâti de charrue (2) apte à être fixé à rotation et/ou à pivotement sur un chevalet de montage pour relier la charrue réversible (1) à un véhicule agricole tracteur et
des rangées (4) de socs de charrue dotées de corps (6) de charrue et disposées sur des côtés opposés du bâti de charrue (2),
un déplacement de rotation du bâti de charrue (2) réalisé à l'aide d'un ensemble d'entraînement permettant de transférer sélectivement l'une ou l'autre des rangées (4) de socs de charrue dans leur position de fonctionnement ou dans leur position de non fonctionnement, et
les corps de charrue (6) étant fixés sur le bâti de charrue par des supports (7) de corps de charrue,
le support (7) d'un corps de charrue (6) étant fixé dans sa position de travail uniquement sur une paroi latérale ou uniquement sur deux parois latérales du bâti de charrue (2), et étant vissé sur une paroi latérale ou sur deux parois latérales du bâti de charrue (2),
**caractérisée en ce que**
le support (7) de corps de charrue et/ou le bâti de charrue (2) présentent au moins un élément en saillie (17) qui s'engage en correspondance géométrique dans une découpe de forme complémentaire ménagée dans le bâti de charrue (2) ou le support (7) de corps de charrue, et
**en ce qu'**au moins deux éléments en saillie (17) prévus à distance mutuelle sont prévus sur le support (7) de corps de charrue et/ou sur le bâti de charrue (2) et s'engagent en correspondance géométrique dans les découpes associées aux éléments en saillie (17) et ménagées dans le bâti de charrue (2) et/ou dans le support (7) de corps de charrue, et
**en ce que** le ou les éléments en saillie (17) et la ou les découpes qui leurs sont associées forment un contre-appui pour le support (7) de corps de charrue et
**en ce qu'**un élément de fixation (16) qui s'engage dans le bâti de charrue (2) est prévu en plus du contre-appui.

2. Charrue réversible selon la revendication 1, **caractérisée en ce que** l'élément de fixation (16) prévu en plus de l'élément en saillie (17) est formé par au moins une liaison filetée.

3. Charrue réversible selon l'une des revendications 1 à 2, présentant un ensemble de réglage de la largeur de travail de la charrue dans les différentes positions de travail, le corps de charrue (6) pouvant être ajusté pour régler la largeur de travail de la charrue autour d'un axe essentiellement vertical, de manière à pivoter sur le bâti de charrue (2) et chaque fois par l'intermédiaire d'un levier (13) qui traverse une découpe (14) ménagée dans le bâti de charrue (2), **caractérisée en ce que**
le levier (13) qui traverse la découpe (14) ménagée dans le bâti de charrue (2) est relié à déplacement à au moins une console (10.1, 10.2) du support (7) de corps de charrue.

4. Charrue réversible selon la revendication 3, **caractérisée en ce que** le levier est relié à au moins une partie (10.1, 10.2) du support (7) de corps de charrue à pivotement autour d'un axe (21) orienté essentiellement à l'horizontale lorsque le corps de charrue (6) est en position de travail.

5. Charrue réversible selon l'une des revendications 3 ou 4, **caractérisée en ce que** le levier (13) qui traverse la découpe (14) ménagée dans le bâti de charrue (2) peut pivoter autour d'un axe (21) qui est aligné parallèlement ou sensiblement parallèlement à une paroi latérale du bâti de charrue (2).

6. Charrue réversible selon l'une des revendications 3 à 5, **caractérisée en ce que** le levier (13) est relié au support (7) de corps de charrue par l'intermédiaire d'un goujon d'articulation (20) qui présente l'axe (21) entre le levier (13) et le support (7) de corps de charrue.

7. Charrue réversible selon l'une des revendications 3 à 6, **caractérisée en ce que** la découpe (14) ménagée à l'intérieur du bâti de charrue (2) présente pour placer le levier (13) une extension en hauteur qui permet le déplacement du levier (13) autour de l'axe (21) aligné sensiblement à l'horizontale.

8. Charrue réversible selon l'une des revendications 3 à 7, **caractérisée en ce que** le levier (13) qui traverse la découpe (14) est relié en même temps par l'axe de pivotement (21) au support (7) de corps de charrue de telle sorte que l'axe (21) effectue un déplacement de pivotement d'au moins une partie du support (7) de corps de charrue autour de l'axe vertical lors du réglage de la largeur de travail de la charrue dans chaque position de travail.

9. Charrue réversible selon l'une des revendications 3 à 8, **caractérisée en ce que** le support (7) de corps de charrue présente deux consoles (10.1, 10.2) disposées à distance mutuelle et entre lesquelles est prévue une douille (12) dotée de goujons d'articulation qui forment l'axe vertical de réglage de la largeur de travail, une partie de fixation (22) sur laquelle le levier (13) engage l'axe (21) orienté essentiellement à l'horizontale étant relié à la douille (12).

10. Charrue réversible selon l'une des revendications 3 à 9, **caractérisée en ce que** le corps de charrue (6) est soutenu sur les deux consoles (10.1, 10.2) du support (7) de corps de charrue disposées à distance mutuelle.

11. Charrue réversible selon la revendication 10, **caractérisée en ce que** les deux consoles (10.1, 10.2) disposées à distance mutuelle sont fixées sur une partie (9) de retenue de corps de charrue relié au bâti de charrue (2).

12. Charrue réversible selon l'une des revendications 3 à 11, **caractérisée en ce que** la partie de maintien de corps de charrue présente une saillie de fixation (18) qui s'engage dans la découpe (14) ménagée dans le bâti de charrue.

13. Charrue réversible selon la revendication 12, **caractérisée en ce que** la partie (9) de retenue de corps de charrue présente des branches de maintien terminales disposées entre les deux consoles (10.1, 10.2) maintenues à distance l'une de l'autre et est vissée sur les deux consoles (10.1, 10.2).

14. Charrue réversible selon l'une des revendications 3 à 13, **caractérisée en ce que** le support (7) de corps de charrue ou une partie (9) du support (7) de corps de charrue présente une découpe (15) essentiellement congruente avec la découpe (14) du bâti de charrue (2), pour la reprise du levier (13).
